# EUROPÄISCHE PATENTANMELDUNG

(11) **EP 1 088 839 A1**
(43) Veröffentlichungstag der Anmeldung: **04.04.2001**
(21) Anmeldenummer: 00119173.3
(22) Anmeldetag: 05.09.2000
(51) Int. Cl.: C08G 18/66, C08G 18/76, C08G 18/79, C08G 18/10, B01D 63/02

(54) **Transparente, heissdampfsterilisierbare, nicht zytotoxische Polyurethan-Vergussmassen, Verfahren zu ihrer Herstellung und ihre Verwendung, insbesondere für medizinisch-technische Artikel**

(30) Priorität: 01.10.1999 DE 19947193
(71) Anmelder: BASF AKTIENGESELLSCHAFT, 67056 Ludwigshafen (DE)
(72) Erfinder: Horn, Peter, Dr., 69118 Heidelberg (DE); Scupin, Hansjoachim, 67069 Ludwigshafen (DE)

(57) **Zusammenfassung**

Gegenstand der Erfindung ist ein Verfahren zur Herstellung von transparenten, heißdampfsterilisierbaren, nicht zytotoxischen Polyurethan-Vergußmassen, herstellbar durch Umsetzung von
a) Polyisocyanaten mit
b) Verbindungen mit mindestens zwei mit Isocyanatgruppen reaktiven Wasserstoffatomen in Gegenwart von
c) Katalysatoren
dadurch gekennzeichnet, daß die Polyisocyanate a) eine Viskosität von maximal 1500 mPa.s, gemessen mit einem Haake-Viskosimeter VT 500, aufweisen, die Verbindungen mit mindestens zwei mit Isocyanatgruppen reaktiven Wasserstoffatomen mindestens einen Polyetheralkohol mit einer mittleren Funktionalität von 2 bis 6 und einer Hydroxylzahl im Bereich von 150 bis 175 mgKOH/g enthalten und die Umsetzung in Gegenwart von d) mindestens einer organischen Carbonsäure durchgeführt wird.

## Beschreibung

Gegenstand der Erfindung sind transparente, heißdampfsterilisierbare, nicht zytotoxische Polyurethan-Vergußmassen, Verfahren zu ihrer Herstellung und ihre Verwendung, insbesondere für medizinisch-technische Artikel.

Polyurethan- im folgenden als PU bezeichnet, -Vergußmassen sind seit langem bekannt und vielfach in der Literatur beschrieben. Die Verwendung von PU-Vergußmassen zur Herstellung von Formteilen für medizinisch-technische Geräte, insbesondere als Einbettwerkstoff für Hohlfasern in Dialysatoren, ist ebenfalls bekannt und beispielsweise in DE-OS 26 46 358, EP 0 305 387, EP 0 844 015 beschrieben. Durch die besondere Konstruktion der Dialysatoren, wie sie beispielsweise in EP 0 844 015 beschrieben wurden, ist es möglich geworden, den Volumenanteil der Hohlfasern im Dialysator um ca. 40 % zu steigern. Dies bleibt nicht ohne Konsequenzen auf die PU-Massen. Eine optimale Tränkung der Hohlfasern kann dadurch erreicht werden, daß die Viskosität der Einsatzkomponenten, insbesondere der Isocyanatkomponente, drastisch gesenkt wird. Prinzipiell ist es auch möglich, die Viskosität der Polyolmischung zu senken, der so erzielte Effekt wäre jedoch wesentlich geringer. Für den Einsatz als Vergußmasse in Hohlfaserdialysatoren ist es weiterhin wesentlich, daß die PU-Masse kein toxisches Potential besitzt. Aufgrund ihrer einfachen Handhabung ist der Einsatz von PU-Vergußmassen für diesen Zweck besonders vorteilhaft.

Aus US-A-3,962,094 sind katalysatorfreie PU-Vergußmassen bekannt, die aus Rizinusöl-4,4'MDI-, Toluylendiisocyanat- oder Phenylendiisocyanat-Prepolymeren mit endständigen NCO-Gruppen und einem Vernetzungsmittel hergestellt werden.

In DE-A-2 749 491 (US-A-4,170,559) werden PU-Vergußmassen beschrieben, die durch Umsetzung eines Prepolymeren, bestehend aus Rizinusöl und Polyoxypropylenglykol sowie 4,4'MDI mit einem Vernetzungsmittel hergestellt werden.

In DE-A-3 048 529 (US-A-4,332,927) werden Zweikomponenten-PU-Systeme, die im ausgehärteten Zustand nicht zytotoxisch sind und sich für medizinische Trennvorrichtungen eignen, beschrieben. Diese enthalten als Katalysator eine dicarboxylierte Dialkylzinnverbindung. Mit Zinn-Schwefel-Verbindungen katalysierte PU-Vergußmassen für Hohlfaserdialysatoren werden in DD-A-155 777 beschrieben. Die genannten PU-Vergußmassen können zu medizinischtechnischen Geräten oder Formteilen hierfür verarbeitet und vor ihrem Gebrauch mit Ethylenoxid und/oder mit Gammastrahlen sterilisiert werden. Diese Art der Sterilisierung ist jedoch nachteilig, da sowohl Reste von Ethylenoxid als auch Spaltprodukte der Behandlung mit Gammastrahlen bei den Patienten ein Gesundheitsrisiko bedeuten können. Ein weiterer Nachteil der beschriebenen Vergußmassen besteht darin, daß sie nicht mit jedem Fasertyp verarbeitet werden können. So können beispielsweise Cellulosefasern durch Rizinusöl enthaltende Vergußmassen geschädigt werden

Physiologisch unbedenkliche PU-Formstoffe, insbesondere zum Einbetten von Hohlfasern in Dialysatoren, werden gemäß DD-A-251 565 hergestellt durch Umsetzung hochreaktiver, niedrigviskoser und lagerstabiler Mischprepolymerer, bestehend aus festen, hochreaktiven aromatischen Diisocyanaten und weniger reaktiven, flüssigen Diisocyanaten und Polyolen, mit Polyolen aus der Gruppe Rizinusöl und/oder dessen Umesterungsprodukten, hochreiner Polyester und Polyoxytetramethylenglykole. PU-Vergußmassen aus einem Isocyanatendgruppen aufweisenden PU-Prepolymeren und einer N,N,N',N'-Tetrakis(2-hydroxypropyl)ethylendiamin enthaltenden Polyolmischung sind Gegenstand von US-A-4 224 164. Nach Angaben der US-A-4 742 112 finden zur Herstellung von PU-Vergußmassen für elektrische Geräte als Polyolkomponente Mischungen aus 10 bis 60 Gew.-% eines Rizinolsäureesters und 90 bis 40 Gew.-% eines C₂-bis C₆-Kohlenwasserstoffpolymeren mit mindestens einer Hydroxylgruppe Verwendung.

Bei der Verarbeitung der üblichen PU-Vergußmassensysteme treten außerdem vielfach Schwierigkeiten während des Produktionsablaufs auf. Die Vergußmassen lassen sich zwar unmittelbar nach dem Verguß und innerhalb eines Zeitraums von ungefähr 30 Minuten danach schneiden; sie härten jedoch sehr rasch nach, so daß die Formkörper, vorzugsweise Dialysefilter, bereits nach 24 Stunden nicht mehr geschnitten werden können. Dieses nachteilige Verhalten führt insbesondere bei Produktionsstörungen und an Arbeitsenden zu Produkteinbußen.

Ein weiterer Mangel der PU-Vergußmassen des Standes der Technik besteht auch darin, daß die Menge an Feinstaub, welcher beim Schneiden der Dialysatoren entsteht, hoch ist. Dies führt zu einem Verstopfen der Hohlfasern, welche zumeist aus mikroporösen Hohlfasern, wie Polysulfon, Polyethersulfon, thermostabilen Thermoplasten bestehen. Verstopfte Filter verhindern die Blutzufuhr und verhindern eine konstante Durchlaufgeschwindigkeit Blut/Dialyseflüssigkeit im Dialysator und sind daher zu vermeiden.

Finden zur Herstellung der PU-Vergußmassen PU-Formulierungen Verwendung, die als Aufbaukomponenten primäre, sekundäre und/oder tertiäre Aminogruppen und reaktive Wasserstoffatome gebunden enthalten, so sind die erhaltenen Vergußmassen instabil gegen eine Sterilisation mit Peressigsäure.

Zur Überwindung der genannten Nachteile werden in EP-A-393 545 transparente, heißdampfsterilisierbare, im wesentlichen kompakte PU-Vergußmassen beschrieben, die unter Verwendung von bei Raumtemperatur flüssigen, modifizierten Diphenylmethandiisocyanaten, die mit einem trifunktionellen Polyoxypropylenpolyol,modifiziert wurden, herstellbar sind. Gemäß EP-A-413 265 werden die modifizierten MDI erhalten durch Umsetzung einer Mischung aus 2,4'- und 4,4'-MDI mit speziellen, mindestens tetratunktionellen Polyetherpolyolen. Die aus diesen Aufbaukomponenten hergestellten PU-Vergußmassen besitzen eine erhöhte Temperaturbeständigkeit und eine verbesserte Hydrolysebeständigkeit, es kann jedoch zu Haftungsproblemen zwischen den PU-Vergußmassen und den Gehäusematerialien des Dialysators, insbesondere beim Einsatz von Polycarbonaten, kommen.

Um diesen Mangel zu beheben, wurde in EP-A-538 673 vorgeschlagen, spezielle Polyetherpolyole zu verwenden, die einen Gehalt an Kaliumionen von 150 bis 1200 ppm aufweisen. Damit konnten die Haftungsprobleme zwar überwunden werden, nachteilig an den in EP-A-538 673 beschriebenen Vergußmassen ist jedoch, daß die Viskosität der verwendeten Isocyanatkomponente für viele Anwendungen zu hoch ist. Insbesondere bei Dialysatoren, die einen hohen Anteil an Hohlfasern enthalten, können dadurch Tränkschwierigkeiten auftreten. Dies führt zu einem erhöhten Ausschuß in der Produktion.

Aufgabe der Erfindung war es somit, heißdampfsterilisierbare, nicht cytotoxische Polyurethan-Vergußmassen entwickeln, die eine gute Verarbeitung, insbesondere eine gute Tränkung der Hohlfasern, ermöglichen, deren Einsatzkomponenten niederviskos sind und die sich nach dem Härten problemlos, insbesondere ohne Ausbildung von Feinstaub, schneiden lassen.

Weiterhin sollte die Aufbaukomponenten der PU-Vergußmassen nur geringe Mengen, vorzugsweise kein Rizinusöl enthalten, da Rizinusöl in seiner Qualität schwankend und mitunter schwierig zu beschaffen ist. Unter geringen Mengen werden hierbei Mengen von bis zu 4 Gew.-Teilen, bezogen auf das Gewicht der Polyurethan-Ausgangskomponenten, verstanden.

Die Aufgabe konnte überraschenderweise gelöst werden, indem die zur Herstellung der Vergußmassen eingesetzte Isocyanatkomponente eine Viskosität von maximal 1500 mPa.s bei 25°C, gemessen mit einem Haake-Viskosimeter VT 500, Typ 001-5583, Meßsystem MV 1, Hersteller Firma Haake, aufweist und deren Aufbaukomponenten mindestens eine organische Carbonsäure sowie einen Polyetheralkohol mit einer mittleren Funktionalität von 2 bis 6 und einer Hydroxylzahl im Bereich von 150 bis 175 mgKOH/g enthalten.

Gegenstand der Erfindung sind demzufolge transparente, heißdampfsterilisierbare, nicht zytotoxische Polyurethan-Vergußmassen, die herstellbar sind durch Umsetzung von
a) Polyisocyanaten mit
b) Verbindungen mit mindestens zwei mit Isocyanatgruppen reaktiven Wasserstoffatomen in Gegenwart von
c) Katalysatoren,
dadurch gekennzeichnet, daß die Polyisocyanate a) eine Viskosität von maximal 1500 mPa.s, gemessen mit einem Haake-Viskosimeter VT 500, aufweisen, die Verbindungen mit mindestens zwei mit Isocyanatgruppen reaktiven Wasserstoffatomen mindestens einen Polyetheralkohol mit einer mittleren Funktionalität von 2 bis 6 und einer Hydroxylzahl im Bereich von 150 bis 175 mgKOH/g enthalten und die Umsetzung in Gegenwart von d) mindestens einer organischen Carbonsäure durchgeführt wird.

Zu den Einsatzkomponenten zur Herstellung der PU-Vergußmassen ist im einzelnen folgendes zu sagen:

### a)

Als Polyisocyanate a), die eine Viskosität von maximal 1500 mPa.s aufweisen, kommt insbesondere Diphenylmethan-Diisocyanat zum Einsatz, das einen Gehalt an Uretonimin-Gruppen von vorzugsweise 10 bis 30 Gew.-% aufweist.

Neben dem Diphenylmethan-Diisocyanat, das einen Gehalt an Uretonimin-Gruppen von vorzugsweise 10 bis 30 Gew.-% aufweist, können bei dieser Ausführungsform des erfindungsgemäßen Verfahrens weitere Polyisocyanate zum Einsatz kommen.

Bevorzugt eingesetzt werden dabei 4,4'-MDI oder 2,4'-MDI oder Isomerenmischungen, die von 0 - 5 Gew.-% 2,2 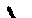 -MDI enthalten können. Geeignet ist auch 2,4 und/oder 2,6 Diisocyanatotoluol (TDI).Die genannten Isocyanate kommen zumeist in modifizierter Form zum Einsatz. Als modifizierte Polyisocyanate werden insbesondere Isocyanatgruppen enthaltende Umsetzungsprodukte der genannten Isocyanate mit mindestens einer Verbindung mit mindestens zwei mit Isocyanatgruppen reaktiven Wasserstoffatomen eingesetzt. Diese Verbindungen werden als Isocyanat-Prepolymere oder auch kurz als Prepolymere bezeichnet. Die Umsetzung der Isocyanate mit den Verbindungen mit mindestens zwei mit Isocyanatgruppen reaktiven Wasserstoffatomen kann dabei in Anwesenheit oder Abwesenheit der Uretonimin-Gruppen enthaltenden Diisocyanate erfolgen.

In einer besonderen Ausführungsform der Erfindung enthalten die Polyisocyanate a) keine Uretonimin-Gruppen enthaltenden Diisocyanate und bestehen nur aus Isocyanat-Prepolymeren. In diesem Fall erfolgt die Herstellung der Isocyanat-Prepolymeren durch Umsetzung von MDI mit speziellen Verbindungen mit mindestens zwei mit Isocyanatgruppen reaktiven Wasserstoffatomen, auf die weiter unten näher eingegangen wird.

Vorzugsweise weisen die Polyisocyanate a) einen NCO-Gehalt im Bereich von 20 bis 32 Gew.-% und eine Viskosität bei 25°C von 400 bis 1500 mPa.s, gemessen mit einem Haake-Viskosimeter VT 500, auf. Die genannten Kennwerte beziehen sich auf die Mischung aller zur Umsetzung verwendeten Polyisocyanate.

Bei dem erfindungsgemäß verwendeten Uretonimingruppen enthaltenden Diisocyanat handelt es sich vorzugsweise um ein Isocyanatgemisch, welches zu ca. 71 Gew.-% aus 4,4'-Diisocyanatodiphenylmethan besteht. Der Rest, bezogen auf 100 Gew.-% besteht aus Uretonimin. Der NCO-Gehalt des erfindungsgemäß eingesetzten Uretonimingruppen enthaltenden Diisocyanats beträgt vorzugsweise 29,3-29,7 Gew.-%. Die Viskosität bei 25°C beträgt 30 bis 60 mPa·s, gemessen mit einem Haake-Viskosimeter VT 500. Das erfindungsgemäß verwendete Uretonimingruppen enthaltende Isocyanat wird vorzugsweise hergestellt durch Umsetzung von 4,4'-MDI mittels eines Phospholen-Katalysators. Derartige Produkte werden beispielsweise von der BASF AG unter dem Handelsnamen Lypranat® MM 103 angeboten. Die Modifizierung von Isocyanaten durch Einbau und Bildung von Uretonimingruppen ist bekannt. Sie ist beispielsweise beschrieben im Kunststoff-Handbuch, Band 7, "Polyurethane", Carl-Hauser Verlag München, Wien, 3. Auflage, 1993, Seite 15.

Der Anteil der Uretonimingruppen enthaltenden Polyisocyanate an der Gesamtmenge an Polyisocyanaten a) beträgt vorzugsweise 1 bis 50 Gew.-%, besonders bevorzugt 1 bis 30 Gew.-% und insbesondere 1 bis 20 Gew.-%, jeweils bezogen auf das Gewicht der Polyisocyanate a).

Zu den übrigen in der Komponente a) enthaltenen Polyisocyanaten ist folgendes zu sagen:

An Stelle der Uretonimingruppen enthaltenden Polyisocyanate können monomere Diisocyanate, vorzugsweise MDI, eingesetzt werden. Hierbei kommen insbesondere 4,4 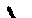 -MDI oder Gemische aus 4,4 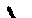 -MDI und 2,4 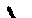 -MDI zum Einsatz.

An Stelle der Uretonimingruppen enthaltenden Polyisocyanate, vorzugsweise jedoch im Gemisch mit diesen, oder im Gemisch mit den monomeren Diisocyanaten, können auch Urethangruppen und Isocyanatgruppen enthaltende Umsetzungsprodukte, sogenannte Isocyanat-Prepolymere, auch als NCO-Preoplymere bezeichnet, verwendet werden.

Als NCO-Preoplymere besonders bewährt haben sich in diesem Fall Urethangruppen gebunden enthaltende NCO-Prepolymere mit einem NCO-Gehalt von 24 bis 15 Gew.-%, vorzugsweise von 22 bis 17 Gew.-%, die hergestellt werden durch Umsetzung von, bezogen auf das Gesamtgewicht, mindesten 85 Gew.-%, vorzugsweise 90 bis 96 Gew.-% eines NCO-gruppenhaltigen Prepolymeren mit einem NCO-Gehalt von 29 bis 21 Gew.-%, vorzugsweise von 26 bis 22 Gew.-%, das seinerseits hergestellt wird durch Umsetzung von 4,4' MDI mit Dipropylenglykol oder mindestens einem Polyoxyproylenglykol mit einer Hydroxyzahl bis 400 mgKOH/g, vorzugsweise von 50 bis 250 oder einer Mischung aus Dipropylenglykol und mindestens einem Polyoxypropylenglykol mit einer Hydroxyzahl bis 400 mgKOH/g mit maximal 5 Gew.-%, vorzugsweise 0,5 bis 4 Gew.-% Rizinusöl oder maximal 15 Gew.-% eines mit Pentaerythrit, Glycerin, Trimethylolpropan gestarteten Polyoxyalkylen-polyols mit einer Hydroxylzahl von 90 bis 200 mgKOH/g und einem Alkaligehalt von kleiner als 10 ppm aus der Gruppe der Polyoxypropylen-, Polyoxypropylen-polyoxyethylen- und Polyoxyethylen-, polyoxypropylen-polyole.

Die Umsetzung der Prepolymere mit dem Rizinusöl und/oder den Polyoxyalkylen-polyolen mit einer Hydroxylzahl von 90 bis 200 mgKOH/g kann dabei gemeinsam mit den Uretonimingruppen enthaltenden Polyisocyanaten sowie den gegebenenfalls mitverwendeten Diisocyanaten erfolgen. Es ist jedoch auch möglich, nur eine der genannten Isocyanatkomponenten mit dem Rizinusöl und/oder den Polyoxyalkylen-polyolen mit einer Hydroxylzahl von 90 bis 200 mgKOH/g umzusetzen und die übrigen Isocyanatkomponenten diesem Umsetzungsprodukt zuzusetzen.

Die unter Verwendung von Uretonimingruppen enthaltenden Polyisocyanaten hergestellten Polyisocyanate a) besitzen vorzugsweise Viskositäten von 70 bis 300 mPa.s bei 25°C. Die ohne Verwendung von Uretonimingruppen enthaltenden Polyisocyanaten hergestellten Polyisocyanate a) besitzen vorzugsweise eine Viskosität von 200 bis 1000 mPa.s bei 25°C, jeweils gemessen mit einem Haake-Viskosimeter VT 500.

### b)

Als Verbindungen mit mindestens 2 mit Isocyanatgruppen reaktiven Wasserstoffatomen werden vorzugsweise Polyetherpolyole mit einer theoretischen Funktionalität von 2 bis 6 und einer Hydroxyzahl im Bereich von 140 bis 175, vorzugsweise von 150 bis 160 mgKOH/g verwendet. Derartige Polyole werden vorzugsweise nach bekannten Verfahren durch Umsetzung von H-funktionalen Startsubstanzen mit niederen Alkylenoxiden, insbesondere Ethylenoxid, Propylenoxid und/oder Butylenoxid, vorzugsweise Propylenoxid, hergestellt.

Insbesondere kommen solche Polyetherole zum Einsatz, bei denen als Startsubstanzen Diole, wie Ethylenglykol, Dipropylenglykol, Propandiol-1,2, oder höherfunktionelle Alkohole, wie Glycerin, Trimethylolpropan, Pentaerythrit oder Dipentaerythrit verwendet werden. Eine bevorzugt eingesetzte Startsubstanz zur Herstellung von Polyetheralkoholen, die für das erfindungsgemäße Verfahren einsetzbar sind, ist Pentaerythrit

Die Startsubstanzen können einzeln oder im Gemisch untereinander zum Einsatz kommen.

Im Gemisch mit den genannten Polyetherolen können auch andere Polyetherole eingesetzt werden. Hierbei kommen vorzugsweise 2-bis 6-funktionelle Polyetherole sowie hochfunktionelle Polyetheralkohole, wie sie insbesondere zur Herstellung von Polyurethan-Hartschaumstoffen eingesetzt werden, mit Hydroxylzahlen vorzugsweise im Bereich zwischen 20 und 500 mgKOH/g, in Betracht.

Als Katalysatoren zur Herstellung der Polyole, welche zur Herstellung der erfindungsgemäßen PU-Vergußmasse verwendet werden können, eignen sich insbesondere Kaliumhydroxid, Cäsiumhydroxid sowie die Multimetallcyanidverbindungen, sogenannte DMC-Katalysatoren. Letztere haben den Vorteil, daß bei ihrer Verwendung sehr hochmolekulare Polyetheralkohole mit einem geringen Gehalt an ungesättigten Bestandteilen hergestellt werden können. Die Reaktivität der Polyetheralkohole kann dadurch erhöht werden, daß bei Polyetheralkoholen, welche ganz oder überwiegend mit Propylenoxid hergestellt werden, am Kettenende noch bis zu 20 Gew.-% Ethylenoxid aufpfropft werden.

Bei allen für das erfindungsgemäße Verfahren eingesetzten Polyolen sollte jedoch aus toxischen Gründen der Einsatz von Bortrifluorid-Ether bzw. Bortrifluorid/Isopropanol als Katalysator vermieden werden.

Als besonders vorteilhaft hat sich der Einsatz eines Diols mit Dipropylenglykol als Starter erwiesen, an das Propylenoxid angelagert wurde. Die Hydroxylzahl des Diols liegt dabei vorzugsweise im Bereich von 50 bis 60 mgKOH/g. Die genannten Polyole werden in der Regel in der Komponente b) eingesetzt, sie können jedoch auch zur Herstellung des als Isocyanatkomponente a) verwendeten Prepolymers eingesetzt werden. Die Polyolkomponente enthält vorzugsweise als Hauptbestandteil ein Polyol mit einer theoretischen Funktionalität von 2 bis 6 und einer Hydroxyzahl von 150 bis 165 mgKOH/g. Die beste Haftung am Gehäusematerial des Dialysators wird mit Polyolen der Hydroxyzahl 150 bis 165 mgKOH/g erzielt. Dies gilt insbesondere für Dialysatoren, deren Gehäuse aus Polycarbonat auf Basis Bisphenol A besteht. Um die Temperaturbeständigkeit und die Haftung der Vergußmasse zu verbessern, ist ein Polyol auf Basis von Pentaerythrit und Propylenoxid mit einer Hydroxylzahl im Bereich zwischen 145 und 165 mg KOH/g bevorzugt. Die Haftung zu Polycarbonat wird nicht beeinträchtigt, wenn z.B. Polyole mit Hydroxylzahlen von größer 200 mgKOH/g eingesetzt werden, limitiert ist jedoch die Hydroxylzahl nach oben durch die Gefahr einer Kernverbrennung der PU-Vergußmasse.

Zu den Verbindungen mit mindestens zwei mit Isocyanatgruppen reaktiven Wasserstoffatomen gehören auch die sogenannten Vernetzungsmittel, die zur Modifizierung der mechanischen Eigenschaften gegebenenfalls eingesetzt werden können. Sofern Vernetzungsmittel zur Modifizierung der mechanischen Eigenschaften umgesetzt werden, finden zweckmäßigerweise Hydroxylgruppen enthaltende Vernetzungsmittel mit einer Funktionalität von 3 bis 8, vorzugsweise 3 bis 4 Verwendung. Beispielhaft genannt seien 3- und mehrwertige Alkohole, wie z.B. Glycerin, Trimethylolpropan, Pentaerythrit, 2,2,6,6-Tetrahydroxymethyl-4-heptandiol-1,7(Dipenterythrit), Tripentaerythrit, Sorbit, Saccharose, Sorbitan und mit diesen Alkoholen gestartete niedermolekulare Polyoxypropylen-, Polyoxyethylen-, Polyoxypropylen-polyoxyethylen-polypolyole mit Molekulargewichten bis 600 g/mol, Sorbitantrioleat.

Die genannten Vernetzer weisen zumeist Alkaligehalte von maximal 10 ppm auf.

Zusätzlich zu den eingangs beschriebenen Polyetheralkohole können gegebenenfalls auch Polyesterole verwendet werden. Geeignete Polyesterole sind beispielsweise in EP-A-393 545, Spalte 5 und 6 beschrieben. Bevorzugt sind kurzkettige Polyesterole mit Hydroxylzahlen im Bereich von 150 bis 180 mgKOH/g. Geeignet sind auch Polyole, die sowohl Ether- als auch Estergruppen im Molekül enthalten.

Erfindungsgemäß enthält die Komponente b) vorzugsweise sogenannte Kettenverlängerer. Die Kettenverlängerer können, falls erforderlich, sowohl mit den Verbindungen mit mindestens zwei mit Isocyanatgruppen reaktiven Wasserstoffatomen oder bei der Herstellung der Prepolymere eingesetzt werden. Bei den Kettenverlängerern handelt es sich üblicherweise um difunktionelle Alkohole mit einem Molekulargewicht im Bereich zwischen 62 und 400 g/mol. Beispielhaft für Kettenverlängerer seien genannt:

Niedermolekulare difunktionelle Alkohole, Ester- oder Ethergruppen als Brückenglieder gebunden enthaltende Glykole Beispielhaft seien genannt: Alkandiole mit 2 bis 10 Kohlenstoffatomen, vorzugsweise 2 bis 6 Kohlenstoffatomen, wie z.B. Ethandiol, Propandiol-1,2 oder -1,3, 2,2-Dimethyl-propandiol, 1,2 Propandiol, Butandiol-1,4, -1,3 oder -2,3, Pentandiol-1,5 oder -2,5, Hexandiol-1,6, 2,2,5-Trimethyl- oder 2,2,5,5- Tetramethyl-hexandiol 1,6; Cycloalkandiole und Alkylcycloalkandiole mit 6 bis 19 Kohlenstoffatomen, vorzugsweise 6 bis 15 Kohlenstoffatomen, wie z.B. 1,4-Dihydroxycyclohexan. 1-Hydroxymethyl-4-hydroxycyclohexan, 1,4-Bis-(hydroxymethyl)-cyclohexan, 4,4'- Dihydroxy-dicyclohexyl-methan oder -propan-2,2, Esterbrücken gebunden enthaltende Glykole, wie z.B. 3-Hydroxy-2,2-dimethylpropionsäure-2-hydroxyethylester, Terephthalsäure,bis-ethylenglykol oder -butandiol-1,4 und Etherbrücken gebunden enthaltende Glykole mit Molekulargewichten bis 378 wie z.B. Hydroxyalkylenether des Hydrochinons, beispielsweise 1,4-Di-(b-hydroxyethyl)-hydrochinon, Oxyalkylen-glykol mit 4 bis 8 Kohlenstoffatomen, wie z.B. Diethylen-, Dipropylen-, Dibutylenglykol, Tripropylenglykol sowie die entsprechenden höhermolekularen Oligomeren davon, wie z.B. Dioxyethylen-, Trioxyethylen-, Dioxypropylen-, Trioxypropylen-, Dioxybutylen-, Trioxybutylen- oder Tetraoxybutylen-glykol. Die Dihydroxyverbindungen aus der Gruppe der Alkan-, Cycloalkan-, Alkylcycloalkyl-diole und der entsprechenden Ester- oder Etherbrücken gebunden enthaltenden Glykole können einzeln oder als Mischungen eingesetzt werden.

Die Menge der Kettenverlängerer beträgt, bezogen auf das Gewicht der PU-Vergußmasse, 0,01 bis 10 Gew.-%.

### c)

Die Umsetzung der Polyisocyanate mit den Verbindungen mit mindestens zwei mit Isocyanatgruppen reaktiven Wasserstoffatomen erfolgt vorzugsweise in Anwesenheit von Urethanisierungskatalysatoren. Entscheidend für ihren Einsatz ist, daß sie keine zytotoxische Wirkung haben. Geeignete Katalysatoren werden beispielsweise in EP-A-538 673 beschrieben. Ganz besonders gut geeignet ist eine Mischung aus Di-n-octylzinn-bis-(2-ethyl-hexylthioglykolat) und Mono-n-octyl-zinn-tris-(2-ethylhexylthioglykolat). n-Octyl-Gruppen aus Zinn sind im Gegensatz zu n-Butyl-Gruppen nicht toxisch.

### d)

Die erfindungsgemäß verwendeten organischen Carbonsäuren d) werden dem Reaktionsgemisch vorzugsweise in einer Menge von 0,01 bis 5 Gew.-Teilen, bezogen auf das Gewicht der PU-Vergußmasse, zugegeben. Die Zugabe der Carbonsäuren erfolgt vorzugsweise zu den Verbindungen mit mindestens zwei mit Isocyanatgruppen reaktiven Wasserstoffatomen b).

Als organische Carbonsäuren sind prinzipiell alle organischen Carbonsäuren, die nicht zytotoxisch wirken können, verwendbar. Bevorzugt sind aliphatische und/oder aromatische Mono-/und Dicarbonsäuren. Besonders bevorzugt eingesetzt werden Fettsäuren. Derartige Säuren sind im "Lehrbuch der organischen Chemie" Carl R. Noller, Springer-Verlag, Berlin, Göttingen, Heidelberg, Jahrgang 1960, Seiten 187 bis 188, beschrieben. Besonders bevorzugt eingesetzt werden Carbonsäuren, ausgewählt aus der Gruppe, enthaltend Benzoesäuren, Rizinolsäure, Ölsäure, Linolsäure und Linolensäure.

Die erfindungsgemäße Verwendung der Säuren war für den Fachmann aus dem Stand der Technik nicht nahegelegt. Insbesondere die durch diese Maßnahme mitbewirkte Reduzierung der Bildung von Feinstaub konnte nicht vorhergesehen werden.

Die Toxizität der Einsatzprodukte und der PU-Vergußmassen wurde bestimmt Guideline ISO 7405 1997 (E), "Dentistry-Preclinical Evaluation of Biocompatibility of Medical Devices used in Dentistry-Test Methods", USP 23, "Biological Renetivity Tests, in vitro, Agar Diffusion Test", pp. 1967-1969, 1995, "Detection of the homolytic and Protein Denaturing Potential with HUMAN Erythrocytes (According to PAPE).

Die Erniedrigung der Viskosität der Isocyanatkomponente wirkte nicht nachteilig auf die Qualität der Vergußmasse aus. Überraschend war auch, daß die Vergußmassen keine Toxizität zeigen, daß sie heißdampfsterilisierbar sind, eine gute Haftung zu den als Gehäusematerialien der Dialysatoren verwendeten thermoplastischen Kunststoffe aufweisen, keine Wechselwirkung mit den mikroporösen Hohlfasern zeigen, und die PU-Vergußmasse rasch durchhärtet, so daß sie nach dem Verguß bereits nach 3 Stunden geschnitten werden kann. Außerdem härtet die PU-Masse nach Erreichen der Endhärte nicht weiter nach, so daß die Vergußmasse auch nach einer Lagerung, wie sie beispielsweise bei Betriebsstörungen oder zum Arbeitsende auftreten kann, problemlos geschnitten werden kann.

Ein wesentlicher Vorteil der Erfindung besteht auch darin, daß die Menge an Feinstaub, welcher beim Schneiden der Dialysatoren entsteht, außerordentlich gering ist. Dies ist vorteilhaft, um ein Verstopfen der Hohlfasern, welche aus mikroporösen Hohlfasern, wie Cuprophan, Polysulfon, Polyethersulfon, thermostabilen Thermoplasten bestehen, zu verhindern. Verstopfte Filter unterbrechen die Blutzufuhr und verhindern somit eine konstante Durchlaufgeschwindigkeit Blut/Dialyseflüssigkeit im Dialysator.

Die Erfindung soll an dem nachstehenden Beispiel näher erläutert werden.

### Beispiel 1

### a) Herstellung des modifizierten Diphenylmethan-Diisocyanats

4 Gew.-Teile einer Mischung aus 4,4 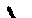 -MDI und 2,4 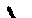 -MDI in einem Gewichtsverhältnis von 1:1 und 74 Gew.-Teile 4,4 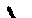 -MDI wurden auf 60°C erwärmt. Unter Rühren wurde zu diesem Gemisch während 30 Minuten eine Mischung aus 14,5 Gew.-Teilen eines Polyoxypropylenglykols mit einem Molekulargewicht von 2000 g/mol und 5 Gew.-Teilen Diupropylenglykol zugetropft. Nach beendeter Umsetzung wurde das Reaktionsgemisch auf Raumtemperatur abgekühlt. Das entstandene Prepolymer hatte eine Viskosität von 725 mPa.s bei 25°C, gemessen mit einem Viscotester VT500, Typ 001-5583, Maßsystem SV1, Hersteller Firma Haake. Der NCO-Gehalt des Prepolymeren betrug 20,5 Gew.-%.

### b) Herstellung der PU-Masse

93,75 Gew.-Teile eines Polyetherols mit einer Hydroxylzahl von 161 mgKOH/g, 4 Gew.-Teile eines Polyetheralkohols mit einer Hydroxylzahl von 556 mgKOH/g und einem Gehalt an Alkaliionen von 3 ppm, hergestellt durch Umsetzung von Pentaerythrit mit 80 Gew.-% Propylenoxid und 20 Gew.-% Ethylenoxid, 0,2 Gew.-Teile einer destillierten Rizinolsäure und 0,05 Gew.-Teile eines Zinnkatalysators Tinstab® OTS 16 der Firma Akros Chemicals GmbH u. Co.KG wurden zu einer Polyolkomponente vermischt.

140 Gew.-Teile dieser Polyolkomponente wurden mit 80,4 Gew.-Teilen des modifizierten Diphenylmethan-Diisocyanats aus Beispiel 1a zur Umsetzung gebracht. Die Temperatur betrug ca. 25°C. Dabei entstand ein Formkörper. Das Reaktionssystem hatte eine Gelzeit von 376 Sekunden. Die PU-Masse hatte eine Shore A Härte von 96 und eine Shore D-Härte von 57. Die erhaltene PU-Masse war vollkommen homogen. Der Feinstaub beim Schneiden des Formkörpers betrug 0,1 mg.

## Patentansprüche

1. Verfahren zur Herstellung von transparenten, heißdampfsterilisierbaren, nicht zytotoxischen Polyurethan-Vergußmassen, herstellbar durch Umsetzung von
a) Polyisocyanaten mit
b) Verbindungen mit mindestens zwei mit Isocyanatgruppen reaktiven Wasserstoffatomen in Gegenwart von
c) Katalysatoren,
dadurch gekennzeichnet, daß die Polyisocyanate a) eine Viskosität von maximal 1500 mPa.s, gemessen mit einem Haake-Viskosimeter VT 500, aufweisen, die Verbindungen mit mindestens zwei mit Isocyanatgruppen reaktiven Wasserstoffatomen mindestens einen Polyetheralkohol mit einer mittleren Funktionalität von 2 bis 6 und einer Hydroxylzahl im Bereich von 150 bis 175 mgKOH/g enthalten und die Umsetzung in Gegenwart von d) mindestens einer organischen Carbonsäure durchgeführt wird.

2. Verfahren nach Anspruch 1, dadurch gekennzeichnet, daß als Polyisocyanate a) solche verwendet werden, die mindestens ein Diphenylmethan-Diisocyanat enthalten, das einen Gehalt an Uretonimin-Gruppen von 10 bis 30 Gew.-% aufweist.

3. Verfahren nach Anspruch 1, dadurch gekennzeichnet, daß das Diphenylmethan-Diisocyanat, das einen Gehalt an Uretonimin-Gruppen von 10 bis 30 Gew.-% aufweist, in einer Menge von 1 bis 50 Gew.-%, bezogen auf das Gewicht der Polyisocyanate a), eingesetzt wird.

4. Verfahren nach Anspruch 1, dadurch gekennzeichnet, daß das Diphenylmethan-Diisocyanat, das einen Gehalt an Uretonimin-Gruppen von 10 bis 20 Gew.-% aufweist, in einer Menge von 1 bis 30 Gew.-%, bezogen auf das Gewicht der Polyisocyanate a), eingesetzt wird.

5. Verfahren nach Anspruch 1, dadurch gekennzeichnet, daß das Diphenylmethan-Diisocyanat, das einen Gehalt an Uretonimin-Gruppen von 10 bis 20 Gew.-% aufweist, in einer Menge von 1 bis 20 Gew.-%, bezogen auf das Gewicht der Polyisocyanate a), eingesetzt wird.

6. Verfahren nach Anspruch 1, dadurch gekennzeichnet, daß als Polyisocyanate a) Prepolymere aus der Umsetzung von Polyisocyanaten mit mindestens einer Verbindung mit mindestens zwei mit Isocyanatgruppen reaktiven Wasserstoffatomen eingesetzt werden.

7. Verfahren nach Anspruch 1, dadurch gekennzeichnet, daß als Polyisocyanate a) Mischungen aus Diphenylmethan-Diisocyanat, das einen Gehalt an Uretonimin-Gruppen von 10 bis 20 Gew.-% aufweist, und Prepolymere aus der Umsetzung von Polyisocyanaten mit mindestens einer Verbindung mit mindestens zwei mit Isocyanatgruppen reaktiven Wasserstoffatomen eingesetzt werden.

8. Verfahren nach Anspruch 1, dadurch gekennzeichnet, daß die Polyisocyanate a) zusammen einen NCO-Gehalt im Bereich von 20 bis 32 Gew.-% aufweisen.

9. Verfahren nach Anspruch 1, dadurch gekennzeichnet, daß als organischen Carbonsäuren aromatische Mono-/und Dicarbonsäuren eingesetzt werden.

10. Verfahren nach Anspruch 1, dadurch gekennzeichnet, daß die organischen Carbonsäuren ausgewählt sind aus der Gruppe, enthaltend Benzoesäuren, Rizinolsäure, Ölsäure, Linolsäure und Linolensäure.

11. Verfahren nach Anspruch 1, dadurch gekennzeichnet, daß die organischen Carbonsäuren in einer Menge von 0,01 bis 5 Gew.-Teilen, bezogen auf das Gewicht der PU-Vergußmasse, eingesetzt werden.

12. Verfahren nach Anspruch 1, dadurch gekennzeichnet, daß als Verbindungen mit mindestens zwei mit Isocyanatgruppen reaktiven Wasserstoffatomen b) Polyetherpolyole mit einer theoretischen Funktionalität von 2 bis 6 und einer Hydroxyzahl im Bereich von 140 bis 175 mgKOH/g eingesetzt werden.

13. Verfahren nach Anspruch 1, dadurch gekennzeichnet, daß die Verbindungen mit mindestens zwei mit Isocyanatgruppen reaktiven Wasserstoffatomen b) mindestens einen difunktionellen Alkohol mit einem Molekulargewicht im Bereich zwischen 62 und 400 g/mol enthält.

14. Polyurethan-Vergußmassen, herstellbar nach einem der Ansprüche 1 bis 12.

15. Verwendung von Polyurethan-Vergußmassen, herstellbar nach Anspruch 13, für die Herstellung von medizinisch- technische Artikeln.

16. Verwendung von Polyurethan-Vergußmassen, herstellbar nach Anspruch 13, für die Herstellung von Hohlfaser-Dialysatoren.
